Europäisches Patentamt

European Patent Office

Office européen des brevets

(11) Publication number: **0 414 042 A2**

# EUROPEAN PATENT APPLICATION

(21) Application number: **90115183.7**

(22) Date of filing: **07.08.90**

(51) Int. Cl.5: **G03B 42/02**, G03B 27/72

(30) Priority: **21.08.89 JP 214367/89**

(43) Date of publication of application:
**27.02.91 Bulletin 91/09**

(84) Designated Contracting States:
**DE GB IT**

(71) Applicant: **KONICA CORPORATION**
**26-2, Nishishinjuku 1-chome, Shinjuku-ku**
**Tokyo 160(JP)**

(72) Inventor: **Metoki, Iku**
**Konica Corporation, 1 Sakura-machi**
**Hino-shi, Tokyo(JP)**

(74) Representative: **Henkel, Feiler, Hänzel &**
**Partner**
**Möhlstrasse 37**
**D-8000 München 80(DE)**

(54) x-ray film processing method, x-ray film photographing equipment, and x-ray film information processing equipment.

(57) A radiography machine of the present invention comprises a photographing apparatus to photograph a radiogram of an organ of a patient to be recorded on an X-ray film and an imprinter to imprint an identification data of the patient on a portion of an X-ray film along with recording of the radiogram. A film data processing apparatus of the radiography machine is provided with a reader unit and a memory unit. The reader unit scans and reads the identification data and the radiogram to form a pair of digital data sets and both data sets thus obtained are memorized in the memory device as a corresponding data sets. The film data processing apparatus is also provided with a cassette for containing a plurality of recorded films and a conveyer to convey the recorded film from a cassette to a reading location of the reader device, sheet by sheet, to be read thereat by the reader device and then stored in the memory device automatically.

FIG. I

EP 0 414 042 A2

# X-RAY FILM PROCESSING METHOD, X-RAY FILM PHOTOGRAPHING EQUIPMENT, AND X-RAY FILM INFORMATION PROCESSING EQUIPMENT

## BACKGROUND OF THE INVENTION

This invention relates to an X-ray film processing method, an X-ray film photographing equipment and an X-ray film information processing equipment by which an X-ray film for medical use is developed and processed so that the photographing information can be stored.

As the space to store a large number of X-ray films of many patients are so large, digital X-ray image storing in magnetic disks have been increasing used in the medical field in recent years so that the space to store X-ray films can be reduced and the stored data can be rapidly retrieved.

At present, in many cases, the patient identifying information is recorded on a label and the label is put on an X-ray film. Besides digitizing the photographing data of X-ray films, an exclusive operator inputs the patient identifying information through a personal computer and the like.

As described above, in the present data processing system, besides the worker who develops X-ray films, an exclusive operator inputs the patient identifying information and another worker must input the human body image information of a patient by in serting the recorded X ray film into a digitizer one by one.

Accordingly, it takes time and needs workers for an X-ray film to go through the processes from development to storage. Furthermore, as X-ray films are manually processed by workers, there is a fear that mistakes may be made in the processing.

This invention has been achieved to solve the problems described above. The object of the present invention is to provide; an X-ray film processing method by which the information about a patient can be stored on an X-ray film; an X-ray film photographing equipment to be used for this processing method; and an X-ray film information processing equipment to be used for processing information obtained by the method mentioned above.

## SUMMARY OF THE INVENTION

In order to solve the problems described above, in the present invention, the patient identifying information is written on an X-ray film before and after photographing, and the patient identifying information is read out and stored when the human body image information of the X-ray film is read out.

The equipment of the present invention comprises: a film cassette in which a plurality of X-ray films are held; and an X-ray film photographing equipment which takes out X-ray films from the cassette one by one, conveys them, and photographs, wherein the X-ray film photographing equipment is provided with a printer which writes in the patient identifying information on a part of the above-described X-ray film.

The equipment of the present invention is provided with an information processing unit which reads out the patient human body image information and the patient identifying information, and which can store the patient human body image information and the patient identifying information, wherein the human body image information and the patient identifying information are linked with each other.

The image processing unit is provided with: a light source control unit which controls the light irradiated on an X-ray film which has been developed in the development unit; a digital conversion unit which receives the light transmitted through the X-ray film and conducts A/D conversion; and an identifying unit which reads out the patient identifying information in the conveyed X-ray film, wherein the information processing unit can store the patient human body image information of the digital signal sent from the above-described digital conversion unit and the patient identifying information of the digital signal sent from the identifying unit, and wherein the patient human body image information and the patient identifying information are linked with each other when they are stored in the information processing unit.

According to the equipment of the present invention, it is easy to write in the patient identifying information on the X-ray film, and it is also easy to record the patient human body image information and the patient identifying information of the developed X-ray film with less manual handling.

The following are the explanations in more detail. In the photographing process, the patient identifying information is written in on an X-ray film. The patient human body image information and the patient identifying information of the developed X-ray film are read out in the image processing unit, and this patient human body image information is linked with the patient identifying information so that they can be easily recorded without any manual operation.

The information can be recorded in the form of digital information.

## BRIEF DESCRIPTION OF THE DRAWINGS

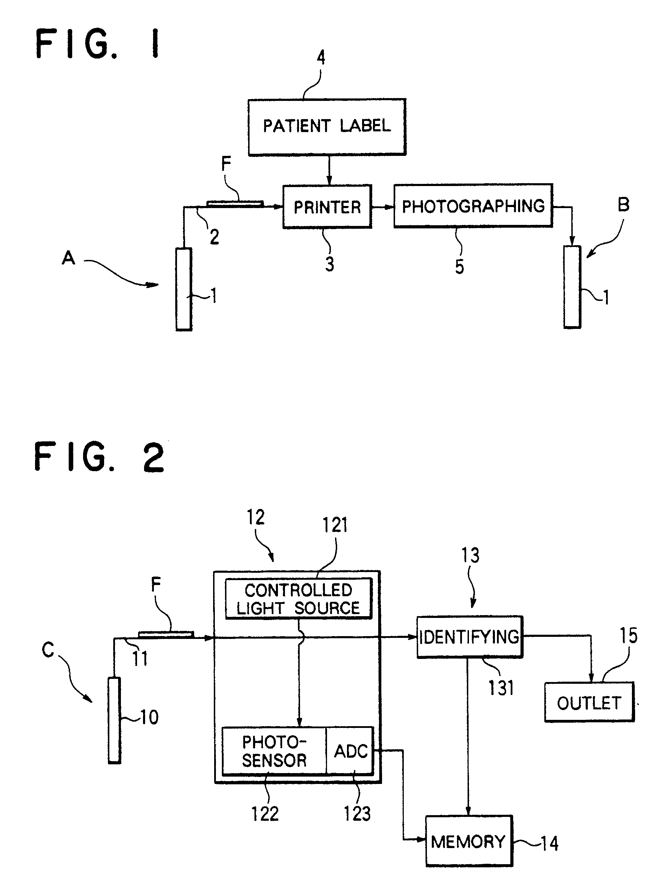

Fig. 1 is a schematic illustration of an X-ray film photographing equipment used in this X-ray film processing method. Fig. 2 is a schematic illustration of an X-ray film information processing equipment used in the X-ray film processing method.

## DETAILED DESCRIPTION OF THE INVENTION

Referring to the attached drawings, one example of the X-ray film processing method of the present invention, the X-ray film photographing equipment used in the processing method and the X-ray film information processing equipment, will be explained as follows.

Fig. 1 is a schematic illustration of the X-ray film photographing equipment used in this X-ray film processing method. Fig. 2 is a schematic illustration of the X-ray film information processing equipment used in the X-ray film processing method.

In the X-ray film photographing equipment illustrated in Fig. 1, the film cassette 1 is set to the supplier unit A, and a plurality of unexposed films are held in the film cassette 1. X-ray film F is taken out one by one from the film cassette 1 and conveyed on the conveyance passage 2. The patient identifying information 4 is written in on the X-ray film F in the printer unit 3 by the method of exposure. This patient identifying information comprises, for example, the name, sex distinction, the date of one's birth, the date of photographing, the photographing conditions and the like. Although these are displayed, for example, by the bar-code, these may be displayed by characters or marks. The position of the patient identifying information on an X-ray film may be on the peripheral portions of the X-ray film. For example, it is preferable that the position is located at the lower right corner of an X-ray film. It is natural that the size of the space occupied by the patient identifying information should be the size which does not interrupt photographing. For instance, it is preferable that the size is smaller than 5cm by 10cm.

After the patient identifying information 4 was written on X-ray film F, photographing of a patient is performed in the photographing unit 5. After photographing has been completed, X-ray film F is put in order into the film cassette 1 in the receiving unit B. The printer 3 may be located at the latter portion of the photographing portion 5 and the patient identifying information 4 may be written in after photographing of a patient has been conducted.

The film cassette in which the photographed X-ray film is held, is set to a developing unit not illustrated in the drawing, and development is conducted by processing the film in the developing tank, the fixing tank, the drying unit and the like so that the patient human body image information and the patient identifying information can be obtained.

The following recording methods can be applied for writing in the patient identifying information of this example other than the above-described bar-code method: the recording method by the two dimensional (white and black) code pattern; and the recording method by magnetism in which the magnetic coated portion is provided to X-ray films.

This recording method in which recording is conducted by the two dimensional (white and black) code pattern, displays the patient identifying information in such a manner that: the frame is set to two kinds of independently readable density, which are white and black, and two levels of two dimensional code are formed; and the patient identifying information is displayed by the combination pattern of the code. The two dimensional pattern which has been displayed in this way, is read out by an optical code reading unit in the identifying unit.

According to the recording method in which a magnetic coating portion is provided to an X-ray film and information is recorded by magnetism, the magnetic coating portion is provided to the X-ray film (for example, the magnetic coating portion is provided to one side of an X-ray film with a notch), and the patient identifying information is written in the magnetic coating portion by magnetism by the printer unit which has a magnetic recording head. The patient identifying information written in in this way, is read out by the magnetic reading unit in the identifying unit.

In the case of the X-ray film information processing unit illustrated in Fig. 2, the film cassette 10 is set to the film cassette portion C, and a plurality of X-ray films F are put into the film cassette 10, wherein X-ray films F have been developed and have the patient human body image information and the patient identifying information.

This X-ray film F is conveyed on the conveyance passage 11 and sent to the patient human body image information processing unit 12 and the patient identifying information processing unit 13. The patient human body image information processing unit 12 is provided with: the light source control unit 121 which irradiates light, for example a laser beam, on X-ray film F; the light receiving unit 122 which receives the laser beam irradiated by the light source control unit 121; and the digital conversion unit 123 which photoelectrically converts the intensity of the light which is transmitted through X-ray film F. Accordingly, the patient human body image information processing unit 12 can read the patient human body image information recorded on X-ray film F and store the information in the memory 14 in the form of digital signals. The patient identifying information processing unit 13 is provided with the identifying unit 131 and reads out the patient identifying information recorded on X-ray film F. Then, the patient identifying information is stored in the memory 14 in the form of digital signals, wherein the patient identifying information is linked with the patient human body image information. When the patient identifying information is displayed by the bar code, the identifying unit 131 is composed of a bar code reader. When the patient identifying information is displayed by letters and marks, the information is converted into digital signals so that it can be stored in the same way as in the patient human body image information processing unit 12. Furthermore, the patient identifying information may be read out at the same time in the patient human body image information processing unit and may be converted into digital signals to be stored. In this case, the identifying unit 131 is not necessary. X-ray film F which has been processed, is conveyed on the conveyance passage 11 and taken out from the outlet 15. After that, the image is diagnosed.

Although the memory 14 is built in the equipment, the information may be stored in the memory provided to other units. The memory 14 is composed, for example, of an optical disk or a magnetic disk.

In this example, the number of the film cassette 10 is 1. However, not less than 2 film cassettes may be provided at the same time. For instance, after one film cassette has been processed, other film cassettes may be processed in a predetermined order in the same way. As explained above, the patient information relating to development can be automatically read out and stored only by setting the film cassette 10.

Accordingly, in the equipment of the present invention, X-ray films are not stained or damaged, wherein when X-ray films are manually supplied and sorted according to the conventional method, they are stained or damaged. Furthermore, in the equipment of the present invention, even when many X-ray films are processed, there is no mistake in its operation. Consequently, there is no waste of time and processing can be rapidly and positively conducted.

In the example illustrated in Fig. 2, the information processing unit may be integrally provided to the developing unit and the developed X-ray films may be processed continuously.

As explained above, in the equipment of the present invention, the patient identifying information is written in on an X-ray film before and after photographing of the X-ray film, and when the patient human body image information of this X-ray film is read out, this patient identifying information is read out together with the patient human body image information and stored. Accordingly, it is easy to write in the patient identifying information on the X-ray film and the patient human body image information and the patient identifying information on the developed film can be simply recorded with less manual handling.

In the equipment of the present invention, a printing portion on which the patient identifying information is written, is provided to a portion of an X-ray film. Accordingly, the patient identifying information can be written in on an X-ray film beforehand in the photographing process, and an exclusive worker who puts a label on the film in the conventional process, is not necessary, so that the personnel expenses can be reduced.

In the equipment of the present invention, the patient human body image information and the patient identifying information of a developed X-ray film, are read out, and the patient human body image information and the patient identifying information are linked with each other in the information processing unit so that they can be stored together. Accordingly, the recorded information of the X-ray film can be easily and rapidly stored with less manual handling, and furthermore X-ray films are not stained or damaged, whereas X-ray films are stained or damaged when a worker manually handles them in the conventional process.

In the equipment of the present invention, the patient human body image information and the patient identifying information of a developed X-ray film are read and stored in the form of digital information. Accordingly, a great amount of patient information can be positively stored.

## Claims

1. A radiography machine comprising:
a photographing apparatus for photographing a radiogram of an organ of a patient to be recorded on a film:
printer means for printing identification data on the film along with the radiogram recording, wherein the identification data includes at least information of the patient to identify the patient from other patients;
reader means for reading the identification data and the radiogram of the recorded film as a pair of digital data sets; and

memory means for memorizing the pair of data sets.

2. A photographing apparatus for use in radiography comprising:

a cassette for containing a plurality of film sheets;

a camera located at a photographing station for photographing a radiogram of an organ of a patient to be recorded on the film; and

conveyance means for conveying the film, sheet by sheet, from the cassette to the photographing station;

printer means for printing the identification data on a predetermined portion of the film.

3. An information processing apparatus for processing information recorded on a film, wherein the information includes an radiogram of an organ of a patient and identification data of the patient, the information processing apparatus comprising:

scanner means for scanning the recorded film with a light beam projected from a light source to be transmitted through the recorded film;

converter means for converting the light intensity of the transmitted beam to corresponding digital intensity data to form radiogram data;

identification means for reading the identification data of the patient; and

memory means for memorizing the patient data and the image data as a corresponding data pair.

# FIG. 1

# FIG. 2